# EUROPEAN PATENT SPECIFICATION

(11) **EP 3 834 184 B1**
(45) Date of publication and mention of the grant of the patent: **28.02.2024**
(21) Application number: 19769886.3
(22) Date of filing: 22.07.2019
(51) Int. Cl.: G08B 13/196, H04N 7/18

(54) **PUBLIC PLACES SURVEILLANCE SYSTEM**
ÜBERWACHUNGSSYSTEM FÜR ÖFFENTLICHE ORTE
SYSTÈME DE SURVEILLANCE DE LIEUX PUBLICS

(30) Priority: 09.08.2018 IT 201800007995
(43) Date of publication of application: 16.06.2021
(73) Proprietor: International Security Service Vigilanza S.p.A., 00169 Roma (RM) (IT)
(72) Inventor: ROMANO, Luigi, 00169 Roma (RM) (IT)
(74) Representative: Fiammenghi, Eva
(86) International application number: PCT/IB2019/056236
(87) International publication number: WO 2020/031006

(56) References cited:
- WO-A1-2015/001528
- CA-A1- 2 529 869
- DE-U1- 20 105 784
- US-A- 6 064 430

## Description

### Field of the art

The present invention regards the field of remote surveillance systems applied to scenario analysis contexts carried out through correlation events between video analysis systems with semantic analysis systems.

More in detail, the present invention regards an integrated hardware and software system for the remote management of safety and emergencies in a plurality of places (school environments, facilities for the elderly, banks, malls, railway stations, airports) where acts of violence, bullying, mistreatments, terrorism could occur.

### Prior art

Known at the current state of the art are a plurality of video surveillance systems which integrate video analysis algorithms aimed at highlighting emergent situations (crossing borders, presence in areas, concentration of resources, moving masses, direction of movements, etc.) detected by algorithms not sufficient to process and/or signal emergent situations deriving from an analysis of the context in which the algorithm is called upon to operate to identify specific behaviours to be examined (mistreatments, acts of bullying, public aggression, pickpocketing, shop lifting, robbery terrorism attacks, etc.).

The guarantee of the intervention and/or report with respect to such specific scenarios currently reveals several challenges arising from:
- legal aspects, especially relating to privacy which could be breached by the continuous monitoring of areas such as schools, hospitals, nursing homes;
- organisational aspects, as regards providing resources dedicated to continuous monitoring of the scenarios filmed by the video cameras.

As regards international patents, domestic alarm systems suitable to monitor domestic accesses and walls to sound an alarm in case of detection of an intruder are predominant. "Verisure", which has been providing optimal anti-theft alarm and anti-intrusion systems for homes and workplaces over the years, is a leader in the industry. The company owns several patents (EP 2698774; EP 2640110; EP 3145211; EP 3211379 and others) all regarding the same field.

However, the Applicant identified some shortcomings in the alarm systems currently available in the market, including those of "Verisure", which are not capable of understanding the dynamics in progress in a crowded context.

The most advanced systems regarding context analysis of a scene, based on neural algorithms, have started appearing in the market and they constitute the study base for the implementation of the invention described hereinafter. As a matter of fact, such algorithms are capable of discriminating objects and things to be searched in a scene being capable of for example recognising the presence of a man or a child, a vehicle or an animal, if the detected movements derive from moving leaves or from developing flames, if the filmed people belong to determined ethnic groups (oriental, European, African, etc.).

Furthermore, the developments in the semantic analysis industry allow to offer added value in analysing scene context.

Thus, a first object of the present invention is to provide a "smart" system for the safety and surveillance of places in which event correlation engines (video analysis + semantic analysis) guarantee an efficient use thereof in schools and nursing homes, which are often scenarios of acts of bullying and mistreatments and in places open to the public for fighting criminality and for preventing acts of terrorism.

A second criticality that the present invention intends to solve regards the respect of the privacy of the persons filmed by the video cameras, according to the regulations in force in many Countries.

Before describing preferred embodiments of the present invention we finally mention further documents generally belonging to the present (or related) technical field(s) of monitoring an area where dangerous situations may occur or already have occurred.

WO 2015/001528 discloses a distributed aperture sensor camera system including several cameras suited to operate continuously, during the day and the night, to monitor and protect an area. The system also comprises adjusting modules and infrared cameras and DTV cameras and can adapt the angles of view of the cameras according to the elaborated signals of the cameras.

DE 201 05 784 U1 discloses a portable system for e.g. rescue workers, including both a real image camera and an infrared camera, wherein the real image camera is mountable on a helmet of a rescue worker and the infrared camera may be held by the hand of the rescue worker. Both cameras are connected to an operations management and send images thereto in real time. The cameras are alternatively connectable to the operations management even via a signal from a return channel, said signal being sent by the operations management. The rescue worker is provided with a bidirectional voice unit for communication with the operations management. Also CA 2 529 869 and US 6 064 430 disclose multi-camera local portable surveillance devices comprising protection masks.

### Description of the invention

Provided according to the present invention is a bullying, violence and mistreatment prevention system that effectively overcomes the problems outlined above through technological systems installed in loco and remote services at at least one operations centre. The invention provides a public places surveillance system as defined by claim 1

The present invention is easily applicable, with the same advantages, to various safety and first aid monitoring environments and in circumscribed places such as schools, hospitals, nursing homes, facilities for the elderly, banks as well as places open to the public such as malls, spaces next to night clubs, airports, railway stations and so on and so forth.

The system subject of the invention is suitable to send possible emergency signals to a remotely positioned operations centre that will receive a streaming of the video fraction that read to the report.

According to dependent claim 2, advantageously, with respect to the privacy regulations in force in Italy and in many Countries, the video received from the operations centre are that of the thermographic camera, so as to make the recorded persons unrecognisable but being able to view the shape only. A common face masking filter is alternatively provided.

The system has the advantage of being easy to install. It consists of at least one local device to be installed at each environment subject of surveillance. Each local device contains at least three types of video cameras whose specific optical features will be modulated depending on the scenario subject of analysis.

The three types of video cameras present in each local device are:
a thermographic camera, a fixed day/night video camera and a motor-driven day/night video camera. Furthermore, the following will be present in the local device:
- a directional microphone designated to detect any clues relating to possible ill-intentioned acts in progress or about to occur;
- an acoustic box for sending possible messages coming from the operations centre or from a local control station;
- an alarm light signalling device which is automatically activated upon detecting situations deemed emergent;
- at least three modules for processing the scene and, specifically: a video analysis module, semantic analysis module and a third events correlation module which is the one designated to detect potentially dangerous situations to be signalled to the remote and/or local station. Said analysis modules are also capable of generating alarms following obscuring of the video cameras or cover of the microphone sensors.

Externally, the local devices appear as boxes made of sheet whose front part, i.e. the one from which the video cameras are seen, is protected by a protection mask preferably made of glass or tinted plexiglass, possibly crescent-shaped.

Advantageously, each time the various processors detect a dangerous situation, the video streaming stored in the memory of a dedicated server is accessible to the operators of the operations centre in an encrypted form that can be deciphered only following a request by law enforcers.

Advantageously, as regards the continuity of the provided service, all hardware components of the system will be power-supplied both by the mains power supply and, in case of absence of power, by common internal rechargeable batteries.

The communication with the remote station and/or with the local station is advantageously guaranteed by the connection to the internet network, wired or via Wi-fi router integrated in the local device with external antennas.

Advantageously, a preferred version of the present invention also integrates inertial sensors suitable to recognise possible attempts to tamper with the local device, thus generating an alarm.

A further preferred version of the present invention also includes a central device, which can be easily arranged in a place under continuous surveillance such as for example an information office or reception desk.

Advantageously installed in this place will be a central device bearing, on a plan of the structure, the various areas placed subject of surveillance by the installed local devices.

In case of occurrence of a situation to be subjected to the attention of the personnel designated to carry out the control, an acoustic signalling device will enter into function to draw attention and the light signalling device regarding the area where the problem is occurring will start flashing.

Possibly, said central device may also be provided with a speakerphone communication device and a display to view the streaming (possibly a thermographic camera or with face masking) live from the area source of the problem.

The arrangement of the central device will advantageously allow an even more timely intervention with respect sending rescue by the remote operations centre.

Duly calibrated and configured based on the field of application thereof, the system subject of the present invention will advantageously be capable of detecting, through the sensors thereof and specific correlation matrices, dangerous situations arising from:
- aggressive behaviour detected from the analysis of the scene in general; focusing the possible position of the people on the ground; detecting screams or expressions typical of an attacking person or a person under attack; raising the noise thresholds; the movement of masses; the positioning of the hands; the rising of the body temperature of the attacker and/or of the person subject of attack and other situations;
- detection of situations relating to possible acts of terrorism, still by analysing the situation in general; the possible position of the people on the ground; the shouts or expressions typical of a person attacking or under attack; the movement of masses; the positioning of the hands; the detection of suspicious explosive belts by means of thermal analysis, the detection of the ethnic group of the people being filmed and the conditioning of specific semantic analysis; the rising of the body temperature of the attacker and/or the person subject of attack; the analysis of the body temperature and the detection of cold sweating and other similar situations, the detection of firearms.

Should the system be used in places attended always by the same people such as schools or nursing homes, it will be associated to a software suitable for the self-learning that is suitable to memorise and recognise the persons that are often source of false alarms over time, so as to use custom-made parameters on each person who is a regular of the space subject of surveillance.

The fields of use of the system provide for fighting violent acts regarding which below is a list provided by way of non-exhaustive example: bullying in school; mistreatment by medical and paramedical personnel on the elderly or disabled in specialised facilities; mistreatments on students or children by the educational institute personnel; violent actions in general, acts of terrorism.

In the specific case of use of the system for fighting terrorism events, the thermal analysis allows, contrary to the current detection systems such as metal detector portals or radiogenic machines whose analysis is conditioned by a close range of the elements to be examined, to correlate the previously described events from a remote position, thus extending the field of prevention to the areas neighbouring the accesses of the facilities.

Advantageously, an even more accessorised embodiment of the system in question also provides for the possibility of using the local devices for sending pre-recorded audio messages to be emitted in situations of general emergency such as fire and earthquake for example. The advantages provided by the present invention will be clear in light of the description outlined up to now. Furthermore, they will be more apparent due to the attached figures and relative detailed description.

### Description of the figures

The invention will be described hereinafter in at least one preferred embodiment, provided by way of non-limiting example, with reference to the attached figures, wherein:

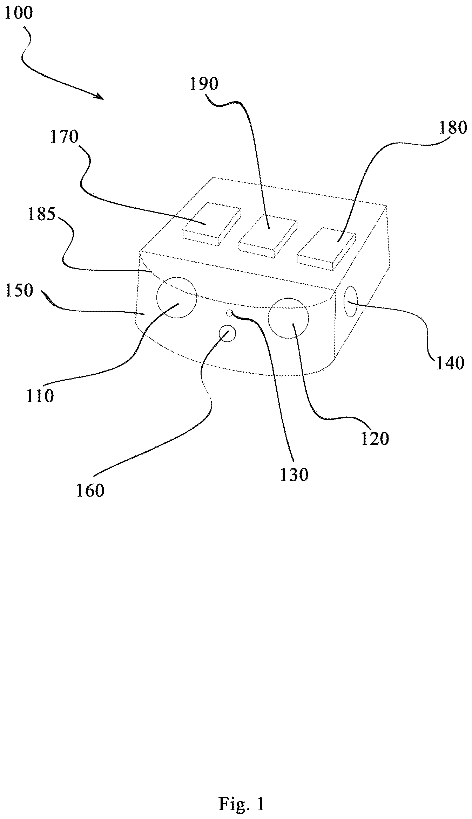

- FIGURE 1 schematically shows a local device 100 provided with a fixed day/night video camera 110, thermographic camera 120, motor-driven day/night video camera 160, directional microphone 130, audio speaker 140, light signalling device 150. Indicated inside the local device 100, with the dashed line, are the three analysis modules which participate in identifying emergency situations. They are a video analysis module 170, a semantic analysis module 180 and an events correlation module 190. Installed outside the front part of the local device 100 is a crescent-like protection mask 185 with tinted glass.

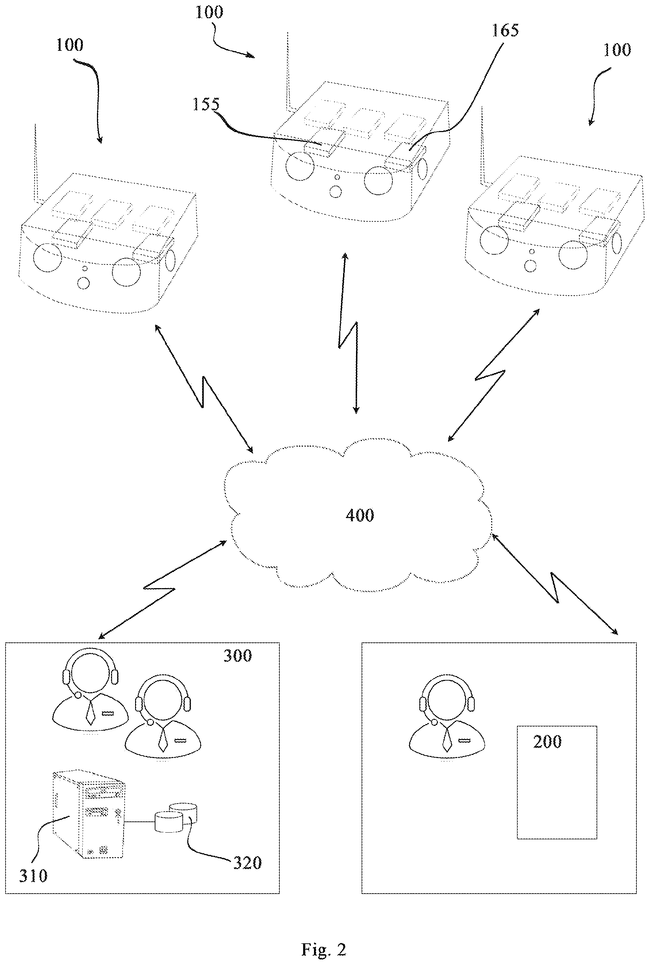

- FIGURE 2 illustrates a plurality of local devices 100, also provided with Wi-fi router 155 and independent battery 165 in this case, which, through the internet network 400, communicate with a central device 200, arranged in an administrative or monitoring area of the place of application of the present invention and with a remote operations centre 300 from which the operators have access to a dedicated server 310 and to the memory 320 connected thereto.

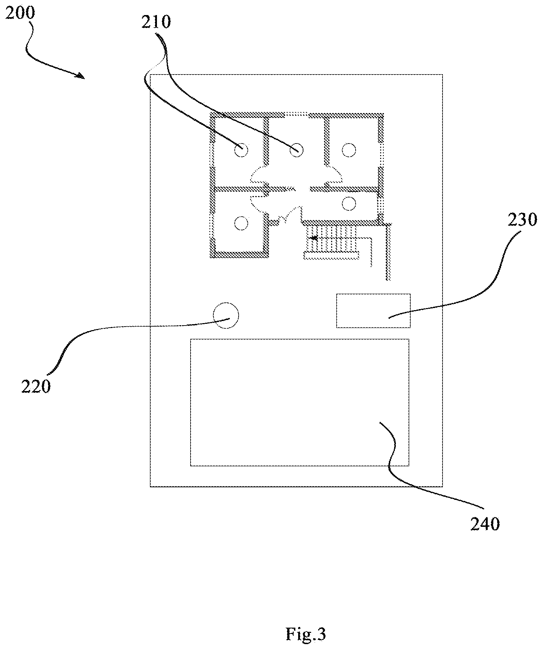

- FIGURE 3 shows an example of configuration of a central device 200 that could be installed, for example, in the information office or reception desk of a school or in the control room for monitoring the facility. Shown above is the hypothetical plan of the school with the layout of the rooms and light signalling device 210 for each room. An acoustic signalling device 220 and the speakerphone communication system 230 allow the personnel of the school to be alerted whenever an emergency situation arises, to see in which room where the situation is occurring, through the light signalling device 210, to receive the audio coming from that room and communicate with them. At the bottom, in a special display 240 the images of the room in which the problem is occurring can be seen in real time.

### Detailed description of the invention

Now, the present invention will be illustrated purely by way of non-limiting or non-binding example with respect to the field of application/function, with reference to the figures illustrating some embodiments regarding the present inventive concept.

In the preferred embodiment, the present invention is to be installed in rooms of the school so as to avert bullying among students and mistreatments by teachers or other personnel of the institute towards weaker persons, and thus similarly extendable to facilities like hospitals, facilities for the elderly etc.

Shown in detail with reference to FIG. 1 is one of the local devices 100 which will be installed in each room of the school. It consists of a box made of sheet provided with an openable front protection mask 185, made of tinted glass which prevents from seeing the video cameras integrated in said local device 100 from being seen from the external.

In particular, three types of video cameras are installed just behind the mask 185:
- a fixed day/night video camera 110, which films the environment subject of surveillance continuously,
- a thermographic camera 120 which, similarly, films the environment subject of surveillance continuously;
- a motor-driven day/night video camera 160 which, upon command by a video analysis module 170 also integrated in the local device 100, is suitable to change the direction to accurately film the spots where an emergency could occur.

The video analysis module 170 is calibrated to detect and draw the attention of the system to acts such as the position of people on the ground, the movement of masses, the positioning of the hands of the people being filmed or the rising of the body temperature of the attacker and/or of the person being attacked and other situations detectable by a general analysis of the specific scene even for anti-terrorism purposes as defined above.

The local device 100 also comprises a directional microphone 130 suitable to detect the sound data from the environment subject of surveillance sending it to at least one integrated semantic analysis module 180. The latter identifies data such as the rising of the noise threshold, screams or expressions typical or a person attacking or under attack or other similar data, adapting the language based on the ethnic background resulting from the analysis.

An events correlation module 190 is the technological part that combines the processing operations carried out by the video analysis module 170 and by the semantic analysis module 180 to generate, according to a pre-established algorithm, an alarm report to be sent both to a central device 200 and to a remotely positioned operations centre 300;
The transmission of the report, with relative sending of a fraction in streaming both of the video and of the audio coming from the environment considered as source of problem, occurs thanks to connection to the internet network 400 of the local device 100 by means of wired or Wi-fi router connection 155.

It should be observed that with the aim of respecting the privacy of the persons being filmed, the images that will be viewed by the operators of the operations centre 300 and by the personnel present in proximity of the central device 200, will be those filmed by the thermographic camera 120 so that only the shapes of the people are visible whereas their identity remains unrecognisable.

In the memory 320 of the server 310 dedicated to the surveillance service, which is accessible from the operations centre 300, the images stored decrypted will be encrypted and made available for view only in case of report to the law enforcers.

The role of the operations centre 300 which receives the alarm report is the one that assesses the actual seriousness of the situation and take due action or file the event away as a false alarm.

Should the alarm be classified as false alarm, the events correlation module 190 of the local device 100 is configured with a self-learning algorithm which will allow it to progressively recognise the behaviour of some persons who usually attend that environment and thus duly calibrate the tolerance thresholds thereof. In other words, in case of a student who usually raises the voice, without revealing a dangerous behaviour in any manner whatsoever, it is likely that the shouts thereof be a source of alarm report when they occur for the first time. After the first and maybe even the second filing of the report as false alarm, the events correlation module 190, recognising that the shouts always come from the same person, will no longer send the report to the operations centre 300 and to the central device 200.

Any attempts to tamper with or cover the video cameras will trigger alarm reports.

Once the images and the sounds have been transmitted to the operations centre 300 and to the central device 200, a light signalling device 150 in the local device 100 which is transmitting them will light up to alert the present on the fact that the environment is being monitored from a remote position.

An audio speaker 140 integrated in the local devices 100 allows to emit alarm acoustic signals should the operations centre 300 and/or the person designated to monitor the central device 200, confirm the occurrence of grounds for emergency requirements. In addition, the audio speaker 140 allows the vocal communication from the operations centre 300 and/or from the area where the central device 200 is installed, towards the environment subject of surveillance. Said central device 200 is represented in Fig. 3 and, in case of the school, it will be installed in the information office or the reception desk or in any other place within the school that is constantly under surveillance by at least one person in charge.

The presence of the central device 200 allows much more timely action to resolve solutions relating to violent acts or the like with respect to the intervention sent by an operations centre 300 located elsewhere.

The central device 200 consisting of a panel bearing the map of the school with the layout of all the rooms and environments where at least one local device 100 is installed. Each local device 100 will be indicated with a relative light signalling device 210 at the room where it is positioned.

When the events correlation module 190 of a local device 100 identifies an emergency situation, a light signalling device 220 at said central device 200 will start sounding to draw attention and the light signalling device 210 corresponding to the room where the event is occurring will flash simultaneously.

In the preferred embodiment of the central device 200, a display 240 will allow to view the video streaming, masking the faces or displaying the images coming from the thermographic camera 120 and a speakerphone communication system 230 will allow to receive the sounds and send messages aimed at calming the people on site that led to triggering the danger report. A secondary use of the system consisting of local devices 100, central device 200 and operations centre 300 is that of exploiting the local devices 100 to emit acoustic signals and pre-recorded messages indicating the actions to be taken in case of general emergency such as fires or earthquakes.

Given the crucial importance of constant running of the devices 100-200 that contribute towards the surveillance of the school, it is obvious that, besides connection to the power mains, each device 100-200 must also be provided with integrated rechargeable batteries, to take over in case of power failure.

Lastly, it is clear that the invention described up to now may be subjected to modifications, additions or variants obvious to a man skilled in the art, without departing from the scope of protection outlined by the attached claims.

## Claims

1. Public places surveillance system, suitable to signal, in the bud, situations of violence or emergency or even terrorism-related, consisting of at least one local device (100) suitable to communicate through the internet network (400) with at least one remotely positioned operations centre (300) wherein at least one operator has access to a dedicated server (310) connected to memory (320) in which all emergency report events in encrypted form are saved; wherein said at least one local device (100) comprises at least:
- one fixed day/night video camera (110) adapted to continuously record the environment subject of surveillance sending the data to at least one video analysis module (170) integrated in said local device (100);
- one thermographic camera (120) adapted to continuously record the environment subject of surveillance sending the data to said video analysis module (170);
- a motor-driven day/night video camera (160) adapted to change orientation, upon command, of said video analysis module (170) for precisely framing in the points where an emergency could occur;
- a directional microphone (130) adapted to detect the sound data from the environment subject of surveillance sending it to at least one semantic analysis module (180) integrated in said local device (100);
- a protection mask (185), suitable to frontally protect said local device (100); said mask (185) being removable and being treated superficially so as to prevent seeing the video cameras (110-120-160) from the external;
- an events correlation module (190) adapted to combine the processing operations carried out by said video analysis module (170) and by said semantic analysis module (180) to generate, according to a pre-established algorithm an alarm report to be sent to said operations centre (300);
- a light signalling device (150) suitable to light-up once said events correlation module (190) detects a potentially dangerous situation and thus the video streaming of the images recorded by the video cameras (110-120-160) and the audio streaming of the sounds detected by said directional microphone (130) is sent to the operations centre (300) and stored in the memory (320) of the dedicated server (310) in an encrypted version;
- an audio speaker (140) suitable to emit alarm acoustic signals should the operations centre (300) confirm the existence of emergency requisites; said audio speaker (140) also allowing vocal communication from the operations centre (300) towards the environment subject of surveillance;
- a power-supply system for connection to the power mains and an integrated rechargeable battery (165) suitable to power-supply the local device (100) even in case of electric power failure;
- a system for connecting to the internet network (400) through wire and/or through a Wi-fi router (155);
said operations centre (300) being suitable to view the images and sounds in streaming and assessing the actual occurrence of potentially dangerous situations, thus taking action, or filing the report as a false alarm.

2. Public places surveillance system, according to the preceding claim 1, **characterised in that** the operators of the operations centre (300) can view the video streaming whose images were previously processed with a face masking filter or they can view the video streaming coming from said thermographic camera (120).

3. Public places surveillance system, according to any one of the preceding claims 1 or 2, **characterised in that** the images and sounds recorded by the local device (100) are stored in the memory (320) of the dedicated server (310) in encrypted form.

4. Public places surveillance system, according to any one of the preceding claims, **characterised in that** it comprises a central device (200) suitable to be installed in a place under permanent surveillance of the facility using said surveillance system; said central device (200) comprising at least one panel bearing the map of the distribution of a plurality of local devices (100) installed in the facility and comprising at least one acoustic signalling device (220); each environment under surveillance being marked by a corresponding light signalling device (210); should an events correlation module (190) of a local device (100) detect a potentially dangerous situation, said central device (200) determining the activation of said acoustic signalling device (220) and the switching ON of the light signalling device (210) regarding the environment in which the emergency is occurring.

5. Public places surveillance system, according to the preceding claim, **characterised in that** said central device (200) comprises a display (240) suitable to transmit the images framed by the local device (100) which detected the emergency, by masking the faces or through images of the thermographic camera (120).

6. Public places surveillance system, according to any one of the preceding claims 4 or 5, **characterised in that** said central device (200) also comprises a common speakerphone communication system (230) connected to the various environments in which the local device (100) was installed.

7. Public places surveillance system, according to any one of the preceding claims 4 to 6, **characterised in that** said central device (200) comprises a key for the simultaneous sending, to all local devices (100) connected thereto, of a general alarm signal, to be used, in situations of general emergency such as fire or earthquake, the sending of said general alarm signal determining the emission of an alarm sound by the audio speakers (140) of all connected local devices (100) or the emission of a pre-recorded message.

8. Public places surveillance system, according to any one of the preceding claims, **characterised in that** said events correlation module (190) of each local device (100) uses a self-learning algorithm suitable to allow the recognition of people who usually visit the place under surveillance, calibrating the report parameters of the emergencies on the habitual behaviours thereof.

9. Public places surveillance system, according to any one of the preceding claims, **characterised in that** said local device (100) is provided with inertial sensors suitable to recognise any tampering attempts, thus generating an alarm to be sent to the operations centre (300) and/or to the possible central device (200).

10. Public places surveillance system, according to any one of the preceding claims, **characterised in that** said video analysis module (170) is suitable to recognise the ethnic group of origin of the framed people determining a conditioning of the analysis carried out by said semantic analysis module (180) according to the detected ethnic group.

11. Public places surveillance system, according to any one of the preceding claims, **characterised in that** it is suitable to be installed in the environments of hospitals, schools, nursing homes, malls, stations, airports and the like.

## Patentansprüche

1. Überwachungssystem für öffentliche Orte, das dazu geeignet ist, im Keim Gewalt- oder Notfallsituationen oder sogar terrorismusbezogene Situationen zu signalisieren, bestehend aus zumindest einer lokalen Vorrichtung (100), die geeignet ist, über das Internetnetzwerk (400) mit zumindest einer entfernt positionierten Einsatzzentrale (300) zu kommunizieren, wobei zumindest ein Bediener Zugang zu einem dedizierten Server (310) hat, der mit einem Speicher (320) verbunden ist, in dem alle Notfallmeldeereignisse in verschlüsselter Form gespeichert werden; wobei die zumindest eine lokale Vorrichtung (100) zumindest aufweist:
- eine ortsfeste Tag/Nacht-Videokamera (110), die dazu angepasst ist, die Umgebung, die Gegenstand der Überwachung ist, kontinuierlich aufzuzeichnen und die Daten an zumindest ein in die lokale Vorrichtung (100) integriertes Videoanalysemodul (170) zu senden;
- eine Thermografiekamera (120), die dazu angepasst ist, die Umgebung, die Gegenstand der Überwachung ist, kontinuierlich aufzuzeichnen und die Daten an das Videoanalysemodul (170) zu senden;
- eine motorgetriebene Tag/Nacht-Videokamera (160), die dazu angepasst ist, auf Befehl des Videoanalysemoduls (170) die Ausrichtung zu ändern, um die Punkte, an denen ein Notfall eintreten könnte, genau zu fassen;
- ein Richtmikrofon (130), das dazu angepasst ist, die Geräuschdaten von der Umgebung, die Gegenstand der Überwachung ist, zu ermitteln und sie an zumindest ein in die lokale Vorrichtung (100) integriertes Semantikanalysemodul (180) zu senden;
- eine Schutzmaske (185), die geeignet ist, die lokale Vorrichtung (100) frontal zu schützen; wobei die Maske (185) abnehmbar ist und oberflächlich so behandelt ist, dass sie die Sicht auf die Videokameras (110-120-160) von außen verhindert;
- ein Ereigniskorrelationsmodul (190), das dazu angepasst ist, die durch das Videoanalysemodul (170) und durch das Semantikanalysemodul (180) durchgeführten Verarbeitungsvorgänge zu kombinieren, um gemäß einem vorher festgelegten Algorithmus eine Alarmmeldung, die an die Einsatzzentrale (300) zu senden ist, zu erzeugen;
- eine Lichtsignalvorrichtung (150), die dazu geeignet ist, aufzuleuchten, sobald das Ereigniskorrelationsmodul (190) eine potenziell gefährliche Situation detektiert und somit das Videostreaming der durch die Videokameras (110-120-160) aufgezeichneten Bilder und das Audiostreaming der durch das Richtmikrofon (130) detektierten Geräusche an die Einsatzzentrale (300) gesendet und in dem Speicher (320) des dedizierten Servers (310) in einer verschlüsselten Version gespeichert werden;
- einen Audio-Lautsprecher (140), der dazu geeignet ist, akustische Alarmsignale abzugeben, wenn die Einsatzzentrale (300) das Vorhandensein von Notfallanforderungen bestätigt; wobei der Audio-Lautsprecher (140) auch eine sprachliche Kommunikation von der Einsatzzentrale (300) in Richtung der Umgebung, die Gegenstand der Überwachung ist, ermöglicht;
- ein Leistungsversorgungssystem für den Anschluss an das Leistungsnetz und eine integrierte wiederaufladbare Batterie (165), die dazu geeignet ist, die lokale Vorrichtung (100) auch im Falle eines Leistungsausfalls mit Leistung zu versorgen;
- ein System zum Verbinden mit dem Internet-Netzwerk (400) über eine Leitung und/oder über einen Wi-Fi-Router (155);
wobei die Einsatzzentrale (300) dazu geeignet ist, die Bilder und Geräusche im Streaming zu betrachten und das tatsächliche Auftreten von potenziell gefährlichen Situationen zu bewerten und somit Maßnahmen zu ergreifen oder die Meldung als Fehlalarm abzulegen.

2. Überwachungssystem für öffentliche Orte nach dem vorhergehenden Anspruch 1, **dadurch gekennzeichnet, dass** die Bediener der Einsatzzentrale (300) das Videostreaming, dessen Bilder zuvor mit einem Gesichtsmaskierungsfilter bearbeitet wurden, sehen können, oder dass sie das Videostreaming, das von der Thermografiekamera (120) stammt, sehen können.

3. Überwachungssystem für öffentliche Orte nach einem der vorhergehenden Ansprüche 1 oder 2, **dadurch gekennzeichnet, dass** die durch die lokale Vorrichtung (100) aufgenommenen Bilder und Töne in dem Speicher (320) des dedizierten Servers (310) in verschlüsselter Form gespeichert werden.

4. Überwachungssystem für öffentliche Orte nach einem der vorhergehenden Ansprüche, **dadurch gekennzeichnet, dass** es eine zentrale Vorrichtung (200) aufweist, die dazu geeignet ist, an einem Ort installiert zu werden, der unter ständiger Überwachung der Einrichtung steht, die das Überwachungssystem verwendet; wobei die zentrale Vorrichtung (200) zumindest ein Panel aufweist, das die Karte der Verteilung einer Mehrzahl von lokalen Vorrichtungen (100) trägt, die in der Einrichtung installiert sind und zumindest eine akustische Signalisierungsvorrichtung (220) aufweisen; wobei jede überwachte Umgebung durch eine entsprechende Lichtsignalvorrichtung (210) markiert wird; wobei die zentrale Vorrichtung (200) im Falle, dass ein Ereigniskorrelationsmodul (190) einer lokalen Vorrichtung (100) eine potenziell gefährliche Situation detektiert, die Aktivierung der akustischen Signalisierungsvorrichtung (220) und das EIN-Schalten der Lichtsignalvorrichtung (210) in Bezug auf die Umgebung, in der sich der Notfall ereignet, bestimmt.

5. Überwachungssystem für öffentliche Orte nach dem vorhergehenden Anspruch, **dadurch gekennzeichnet, dass** die zentrale Vorrichtung (200) ein Display (240) aufweist, das dazu geeignet ist, die durch die lokale Vorrichtung (100), die den Notfall detektiert hat, aufgenommenen Bilder durch Maskieren der Gesichter oder durch Bilder der Thermografiekamera (120) zu senden.

6. Überwachungssystem für öffentliche Orte nach einem der vorhergehenden Ansprüche 4 oder 5, **dadurch gekennzeichnet, dass** die zentrale Vorrichtung (200) auch ein übliches Freisprech-Kommunikationssystem (230) aufweist, das mit den verschiedenen Umgebungen, in denen die lokale Vorrichtung (100) installiert wurde, verbunden ist.

7. Überwachungssystem für öffentliche Orte nach einem der vorhergehenden Ansprüche 4 bis 6, **dadurch gekennzeichnet, dass** die zentrale Vorrichtung (200) eine Taste für das gleichzeitige Senden eines allgemeinen Alarmsignals an alle daran angeschlossenen lokalen Vorrichtungen (100) aufweist, das in allgemeinen Notfallsituationen wie Feuer oder Erdbeben verwendet werden soll, wobei das Senden des allgemeinen Alarmsignals die Abgabe eines Alarmtons durch die Audio-Lautsprecher (140) aller angeschlossenen lokalen Vorrichtungen (100) oder die Abgabe einer vorher aufgezeichneten Mitteilung bestimmt.

8. Überwachungssystem für öffentliche Orte nach einem der vorhergehenden Ansprüche, **dadurch gekennzeichnet, dass** das Ereigniskorrelationsmodul (190) jeder lokalen Vorrichtung (100) einen selbstlernenden Algorithmus verwendet, der dazu geeignet ist, die Erkennung von Personen, die den überwachten Ort üblicherweise besuchen, zu ermöglichen, wobei die Meldungsparameter der Notfälle auf deren übliche Verhaltensweisen kalibriert werden.

9. Überwachungssystem für öffentliche Orte nach einem der vorhergehenden Ansprüche, **dadurch gekennzeichnet, dass** die lokale Vorrichtung (100) mit Trägheitssensoren ausgestattet ist, die dazu geeignet sind, Manipulationsversuche zu erkennen und so einen Alarm zu erzeugen, der an die Einsatzzentrale (300) und/oder an die mögliche zentrale Vorrichtung (200) zu senden ist.

10. Überwachungssystem für öffentliche Orte nach einem der vorhergehenden Ansprüche, **dadurch gekennzeichnet, dass** das Videoanalysemodul (170) dazu geeignet ist, die ethnische Herkunftsgruppe der detektierten Personen zu erkennen, indem es eine Konditionierung der durch das Semantikanalysemodul (180) durchgeführten Analyse in Abhängigkeit von der detektierten ethnischen Gruppe bestimmt.

11. Überwachungssystem für öffentliche Orte nach einem der vorhergehenden Ansprüche, **dadurch gekennzeichnet, dass** es dazu geeignet ist, in der Umgebung von Krankenhäusern, Schulen, Pflegeheimen, Einkaufszentren, Bahnhöfen, Flughäfen und dergleichen installiert zu werden.

## Revendications

1. Système de surveillance de lieux publics adapté pour signaler, le plus tôt possible, des situations de violence ou d'urgence ou même liées au terrorisme, constitué d'au moins un dispositif local (100) adapté pour communiquer à travers le réseau Internet (400) avec au moins un centre d'exploitation positionné à distance (300), dans lequel au moins un opérateur a accès à un serveur dédié (310) relié à une mémoire (320), dans laquelle tous les événements de rapport d'urgence sous la forme cryptée sont enregistrés ; dans lequel ledit au moins un dispositif local (100) comprend au moins :
- une caméra vidéo jour/nuit fixe (110) adaptée pour enregistrer en continu l'environnement soumis à surveillance en envoyant les données à au moins un module d'analyse vidéo (170) intégré dans ledit dispositif local (100) ;
- une caméra thermographique (120) adaptée pour enregistrer en continu l'environnement soumis à surveillance en envoyant les données audit module d'analyse vidéo (170) ;
- une caméra vidéo jour/nuit motorisée (160) adaptée pour changer l'orientation, sur commande, dudit module d'analyse vidéo (170) pour cadrer précisément les points où une urgence pourrait survenir ;
- un microphone directionnel (130) adapté pour détecter les données sonores de l'environnement soumis à surveillance en les envoyant à au moins un module d'analyse sémantique (180) intégré dans ledit dispositif local (100) ;
- un masque de protection (185) adapté pour protéger frontalement ledit dispositif local (100) ; ledit masque (185) étant amovible et étant traité superficiellement de sorte à empêcher la vue des caméras vidéo (110-120-160) depuis l'extérieur ;
- un module de corrélation d'événements (190) adapté pour combiner les opérations de traitement réalisées par ledit module d'analyse vidéo (170) et par ledit module d'analyse sémantique (180) pour générer, selon un algorithme préétabli un rapport d'alarme à envoyer audit centre d'exploitation (300) ;
- un dispositif de signalisation lumineuse (150) adapté pour s'allumer une fois que ledit module de corrélation d'événements (190) détecte une situation potentiellement dangereuse et ainsi la diffusion vidéo des images enregistrées par les caméras vidéo (110-120-160) et la diffusion audio des sons détectés par ledit microphone directionnel (130) sont envoyées au centre d'exploitation (300) et stockées dans la mémoire (320) du serveur dédié (310) dans une version cryptée ;
- un haut-parleur audio (140) adapté pour émettre des signaux acoustiques d'alarme si le centre d'exploitation (300) devait confirmer l'existence de conditions requises d'urgence ; ledit haut-parleur audio (140) permettant aussi la communication vocale du centre d'exploitation (300) vers l'environnement soumis à surveillance ;
- un système d'alimentation électrique pour la connexion au réseau électrique et une batterie (165) rechargeable intégrée adaptée pour alimenter le dispositif local (100) même en cas de panne d'électricité ;
- un système pour la connexion au réseau Internet (400) de manière filaire et/ou par un routeur Wi-Fi (155) ; ledit centre d'exploitation (300) étant adapté pour visionner les images et sons en diffusant et évaluant l'apparition réelle de situations potentiellement dangereuses, prenant ainsi des mesures, ou classant le rapport comme fausse alarme.

2. Système de surveillance de lieux publics selon la revendication précédente 1, **caractérisé en ce que** les opérateurs du centre d'exploitation (300) peuvent visualiser la diffusion vidéo dont les images ont été précédemment traitées avec un filtre de masquage de visage ou ils peuvent visualiser la diffusion vidéo provenant de ladite caméra thermographique (120).

3. Système de surveillance de lieux publics selon l'une des revendications précédentes 1 ou 2, **caractérisé en ce que** les images et sons enregistrés par le dispositif local (100) sont stockés dans la mémoire (320) du serveur dédié (310) sous la forme cryptée.

4. Système de surveillance de lieux publics selon l'une des revendications précédentes, **caractérisé en ce qu'**il comprend un dispositif central (200) adapté pour être installé dans un emplacement sous surveillance permanente de l'installation en utilisant ledit système de surveillance ; ledit dispositif central (200) comprenant au moins un panneau portant la carte de la distribution d'une pluralité de dispositifs locaux (100) installés dans l'installation et comprenant au moins un dispositif de signalisation acoustique (220) ; chaque environnement sous surveillance étant marqué par un dispositif de signalisation lumineuse correspondant (210) ; si un module de corrélation d'événements (190) d'un dispositif local (100) devait détecter une situation potentiellement dangereuse, ledit dispositif central (200) déterminant l'activation dudit dispositif de signalisation acoustique (220) et l'allumage du dispositif de signalisation lumineuse (210) concernant l'environnement dans lequel l'urgence se produit.

5. Système de surveillance de lieux publics selon la revendication précédente, **caractérisé en ce que** ledit dispositif central (200) comprend un affichage (240) adapté pour transmettre les images cadrées par le dispositif local (100) qui a détecté l'urgence, en masquant les visages ou à travers des images de la caméra thermographiques (120).

6. Système de surveillance de lieux publics selon l'une des revendications précédentes 4 ou 5, **caractérisé en ce que** ledit dispositif central (200) comprend aussi un système de communication par haut-parleur commun (230) relié aux divers environnements, dans lesquels le dispositif local (100) a été installé.

7. Système de surveillance de lieux publics selon l'une des revendications précédentes 4 à 6, **caractérisé en ce que** ledit dispositif central (200) comprend une touche pour l'envoi simultané, à tous les dispositifs locaux (100) reliés à celui-ci, d'un signal d'alarme général, à utiliser, dans des situations d'urgence générale telle qu'un incendie ou un tremblement de terre, l'envoi dudit signal d'alarme général déterminant l'émission d'une alarme sonore par les haut-parleurs audio (140) de tous les dispositifs locaux reliés (100) ou l'émission d'un message préenregistré.

8. Système de surveillance de lieux publics selon l'une des revendications précédentes, **caractérisé en ce que** ledit module de corrélation d'événements (190) de chaque dispositif local (100) utilise un algorithme d'autoapprentissage adapté pour permettre la reconnaissance de personnes qui visitent généralement l'emplacement sous surveillance, en étalonnant les paramètres de rapport des urgences sur les comportements habituels de ceux-ci.

9. Système de surveillance de lieux publics selon l'une des revendications précédentes, **caractérisé en ce que** ledit dispositif local (100) est doté de capteurs inertiels adaptés pour reconnaître toute tentative d'effraction, générant ainsi une alarme à envoyer au centre d'exploitation (300) et/ou au dispositif central possible (200).

10. Système de surveillance de lieux publics selon l'une des revendications précédentes, **caractérisé en ce que** ledit module d'analyse vidéo (170) est adapté pour reconnaître le groupe ethnique d'origine des personnes cadrées déterminant un conditionnement de l'analyse réalisée par ledit module d'analyse sémantique (180) selon le groupe ethnique détecté.

11. Système de surveillance de lieux publics selon l'une des revendications précédentes, **caractérisé en ce qu'**il est adapté pour être installé dans les environnements d'hôpitaux, écoles, maisons de retraite, centres commerciaux, gares, aéroports et similaires.
